# DEMANDE DE BREVET EUROPEEN

(11) **EP 4 566 947 A1**
(43) Date de publication de la demande: **11.06.2025**
(21) Numéro de dépôt: 24216654.4
(22) Date de dépôt: 29.11.2024
(51) Int. Cl.: B64C 39/02

(54) **SYSTÈME DE VOL COMPRENANT DES MODULES DE PROPULSION PIVOTABLES**

(30) Priorité: 04.12.2023 FR 2313497
(71) Demandeur: Khris, Taïg, 75010 Paris (FR)
(72) Inventeur: Khris, Taïg, 75010 Paris (FR)
(74) Mandataire: Argyma

(57) **Abrégé**

La présente invention vise un système de vol (2) comprenant :
- un harnais (4) configuré pour être porté par un utilisateur (1), ledit harnais (4) couvrant au moins partiellement le buste et entourant les hanches de l'utilisateur (1) ;
- une pluralité de modules primaires (6) de propulsion reliés au harnais (4), la pluralité de modules primaires (6) étant répartis symétriquement au niveau des hanches de l'utilisateur (1), les modules primaires (6) étant configurés pour exercer une force de poussée primaire de sorte à élever ou maintenir en l'air l'utilisateur (1) ;
- au moins un réservoir (10) d'énergie configuré pour alimenter en énergie la pluralité de modules de propulsion ;
le système de vol (2) étant caractérisé en ce que la pluralité de modules primaires (6) de propulsion est pivotable au moins entre une configuration de vol vertical et une configuration de vol horizontale.

## Description

### DOMAINE TECHNIQUE

La présente invention concerne le domaine technique des systèmes de vol.

Plus particulièrement, la présente invention concerne le domaine technique des systèmes de vol individuels, notamment d'un système de vol individuel de type « JetPack ».

### ETAT DE LA TECHNIQUE

Il est connu de l'état de la technique un système de vol individuel comprenant au moins un module de propulsion configuré pour exercer une force de poussée permettant d'élever ou de maintenir un utilisateur équipé du système de vol. Un tel système de vol comprend généralement un harnais configuré pour être porté par l'utilisateur comme un sac à dos, le module de propulsion étant alors localisé dans le dos de l'utilisateur. Le système de vol est alors communément qualifié comme étant du type « JetPack ».

Il est connu de l'état de la technique un système de vol de type « JetPack » comprenant des modules de propulsion supplémentaires. Par exemple, il est décrit un système de vol dans lequel lesdits modules de propulsion supplémentaires sont fixés au niveau des bras, des jambes et du plexus de l'utilisateur. L'utilisateur peut alors voler dans une configuration de vol dite de « vol vertical », dans lequel un plan frontal du corps de l'utilisateur s'étend sensiblement perpendiculairement par rapport au sol. Un tel système de vol présente l'avantage, pour une quantité d'énergie embarquée, de pouvoir répartir sur l'intégralité du corps de l'utilisateur une pluralité de forces de poussée, facilitant ainsi la stabilisation de l'utilisateur en l'air. Le document GB2570773A décrit un dispositif similaire, un module de propulsion supplémentaire étant fixé dans le bas du dos de l'utilisateur.

A titre d'exemple, une autre réalisation de « vol vertical » est décrite dans le document US2018208312A1, dans lequel une plateforme équipée de module de propulsion est fixée aux pieds d'un utilisateur par l'intermédiaire de bottes occupant la fonction de harnais précédemment décrite.

Alternativement, le document US10364028B1 décrit un système de vol dans lequel lesdits modules de propulsion sont fixés uniquement au niveau des bras, des jambes et sur les côtés du tronc du corps d'un utilisateur équipé du système de vol. L'utilisateur peut alors voler dans une configuration de vol, dit « vol horizontal », dans lequel le plan frontal du corps de l'utilisateur s'étend sensiblement parallèlement par rapport au sol. Un tel système de vol présente également l'avantage de pouvoir répartir sur l'intégralité du corps de l'utilisateur une pluralité de forces de poussée, facilitant la stabilisation de l'utilisateur en l'air.

Néanmoins, les systèmes de vol existant présentent l'inconvénient de contraindre l'utilisateur à conserver une posture sensiblement identique pendant l'intégralité du vol, autrement dit, l'orientation du plan frontal du corps de l'utilisateur est sensiblement invariante pendant le vol. De plus, un utilisateur volant dans une configuration de vol vertical, respectivement de vol horizontal, doit décoller et atterrir dans la même configuration de vol vertical, respectivement de vol horizontal. En outre, tout vol dans une configuration intermédiaire est également proscrit. Par ailleurs, dans ces systèmes, les membres de l'utilisateur, c'est-à-dire ses bras et/ou ses jambes, sont mobilisés par le système de propulsion, limitant la liberté de mouvement de l'utilisateur. Enfin, dans les systèmes de vol existant, la stabilité et l'équilibre de l'utilisateur en vol sont gérés par l'utilisateur seul, en fonction de sa capacité de proprioception et de sa maitrise du système de vol, ce qui peut lui faire courir un risque de chute, particulièrement dans le cas d'un utilisateur novice.

L'invention vise donc à résoudre tout ou partie des problèmes de l'état de la technique, en proposant un système de vol équipant un utilisateur et lui permettant de varier sa posture pendant le vol, simple d'accès et présentant une maniabilité accrue laissant libre les membres de l'utilisateur.

### PRÉSENTATION DE L'INVENTION

Plus précisément, l'invention a pour objet un système de vol comprenant :
- un harnais configuré pour être porté par un utilisateur, ledit harnais couvrant au moins partiellement le buste et entourant les hanches de l'utilisateur ;
- une pluralité de modules primaires de propulsion reliés au harnais, la pluralité de modules primaires étant répartis symétriquement au niveau des hanches de l'utilisateur de part et d'autre d'un plan sagittal du corps de l'utilisateur, les modules primaires étant configurés pour exercer une force de poussée primaire de sorte à élever ou maintenir en l'air l'utilisateur ;
- au moins un réservoir d'énergie configuré pour alimenter en énergie la pluralité de modules primaires de propulsion.

Le système de vol est remarquable en ce que la pluralité de modules primaires de propulsion est pivotable, par l'intermédiaire de liaisons rotules entre le harnais et la pluralité de modules primaires de propulsions, au moins entre une configuration de vol vertical dans laquelle un plan frontal du corps de l'utilisateur s'étend perpendiculairement par rapport au sol et une configuration de vol horizontale dans laquelle le plan frontal du corps de l'utilisateur s'étend parallèlement par rapport au sol.

Par le vocable « plan sagittal », on entend un plan anatomique du corps de l'utilisateur, passant par le centre de gravité du corps de l'utilisateur et qui divise de manière symétrique le corps en une partie droite et une partie gauche.

Par le vocable « plan frontal », on entend un plan anatomique du corps de l'utilisateur, passant par le centre de gravité du corps de l'utilisateur, perpendiculaire au plan sagittal et qui divise le corps en une partie avant et une partie arrière.

Par le vocable « plan transversal », on entend un plan anatomique du corps de l'utilisateur, passant par le centre de gravité du corps de l'utilisateur, perpendiculaire au plan sagittal ainsi qu'au plan frontal et qui divise le corps en une partie haute et une partie basse.

Par le vocable « buste », on entend la partie supérieure du corps de l'utilisateur, qui, sauf précision supplémentaire, désigne aussi bien le torse de l'utilisateur que le dos de l'utilisateur.

Grâce à une telle combinaison de caractéristiques, un tel système de vol permet à un utilisateur équipé de voler dans toute configuration de vol comprise entre la configuration de vol horizontal et la configuration de vol vertical, et de passer d'une configuration à une autre pendant le vol. Ainsi, l'utilisateur peut choisir simplement la configuration la plus appropriée, par exemple en fonction de la phase de vol, des conditions de stabilité ou de la topologie de l'environnement survolé. Par exemple, l'utilisateur peut réaliser une opération de décollage en configuration de vol vertical puis, lorsqu'il atteint une altitude satisfaisante, effectuer une transition de la configuration de vol vertical vers la configuration de vol horizontal. Cela vaut d'ailleurs pour la configuration de vol horizontal sur le ventre comme pour la configuration de vol horizontal sur le dos. De la même manière, l'utilisateur peut effectuer une transition de la configuration de vol horizontal vers la configuration de vol vertical, par exemple pour réaliser une opération d'atterrissage. En outre, un tel système de vol laisse libre les mains et jambes de l'utilisateur, lui simplifiant le vol. L'utilisateur peut alors interagir avec son environnement proche, par exemple pour réaliser des tâches manuelles à l'aide d'outils ou pour se tenir sur des structures sans se soucier constamment de sa stabilité et de son équilibre en vol. Un tel système de vol est ainsi configuré de sorte à garantir l'équilibre et la stabilité de l'utilisateur en vol, quelle que soit la configuration de vol et quels que soient sa capacité de proprioception et sa maitrise du système de vol.

Avantageusement, la force de poussée primaire est parallèle au plan frontal dans la configuration de vol vertical et la force de poussée primaire est perpendiculaire au plan frontal dans la configuration de vol horizontal. Dans une telle configuration, le système de vol autorise l'utilisateur à décoller ou atterrir perpendiculairement par rapport au sol dans la configuration de vol vertical comme dans la configuration de vol horizontal. Une telle configuration permet également le vol stationnaire.

Avantageusement, la pluralité de modules primaires est pivotable dans une configuration de décollage dans laquelle la force de poussée de chacun des modules primaires 6 est perpendiculaire au plan sagittal et orientée à l'opposé de l'utilisateur de sorte que la force de poussée primaire soit nulle. Dans une telle configuration, l'utilisateur au sol peut régler la force de poussée primaire sans que cette dernière soit orientée vers le sol, et passer de la configuration de décollage à l'une des configurations de vol lorsque la poussée est suffisante pour que l'utilisateur puisse s'élever intégralement sans risque.

Avantageusement, le système de vol comprend une pluralité de modules secondaires de propulsion reliée au harnais, la pluralité de modules de propulsion secondaire étant répartis symétriquement, au-dessus des épaules de l'utilisateur et configurée pour exercer une force de poussée secondaire. Dans une telle configuration, les forces de poussées élevant l'utilisateur sont partiellement distribuées sur le haut du corps de l'utilisateur, permettant de gagner en stabilité, particulièrement en configuration de vol horizontal.

Avantageusement, le harnais comprend des genouillères configurées pour être portées par l'utilisateur et une pluralité de modules tertiaires de propulsion reliée aux genouillères, la pluralité de modules tertiaires de propulsion étant répartis symétriquement au niveau des genoux de l'utilisateur et configurée pour exercer une force de poussée tertiaire. Dans une telle configuration, les forces de poussée élevant l'utilisateur sont partiellement distribuées sur le bas du corps de l'utilisateur, permettant de gagner en stabilité, particulièrement en configuration de vol vertical.

Avantageusement, le réservoir d'énergie est solidaire du harnais au niveau du buste de l'utilisateur. Dans une telle configuration, l'utilisateur embarque ses propres réserves d'énergie. Le réservoir est par exemple situé dans le dos de l'utilisateur.

Avantageusement, le réservoir comprend un premier compartiment configuré pour alimenter les modules de propulsion d'un premier côté du plan sagittal et un deuxième compartiment configuré pour alimenter les modules de propulsion d'un deuxième côté du plan sagittal. Dans une telle configuration, la position des réservoirs peut être adaptée pour être au plus proche des modules alimentés. En outre, une partie du dos de l'utilisateur peut être laissé libre, par exemple pour accueillir un équipement supplémentaire.

Selon un mode de réalisation, le système de vol comprend un module de propulsion dorsal relié au harnais au niveau du buste de l'utilisateur et configuré pour exercer une force de poussée dorsale. La force de poussée dorsale est parallèle au plan frontal de l'utilisateur. Dans la configuration de vol vertical, la force de poussée dorsale contribue au déplacement vertical de l'utilisateur. Dans la configuration de vol horizontal, la force de poussée dorsale permet le déplacement horizontal de l'utilisateur. Dans toute configuration intermédiaire, la force de poussée dorsale contribue à la fois au déplacement vertical et au déplacement horizontal de l'utilisateur. La force de poussée dorsale contribue aussi au maintien en l'air, notamment en vol stationnaire.

Avantageusement, les modules primaires de propulsion d'un même côté donné du plan sagittal sont solidaires d'au moins un module primaire adjacent, un unique module primaire de propulsion étant en liaison rotule avec le harnais. Dans une telle configuration, l'intégralité des modules de propulsion d'un même côté donné du plan sagittal peuvent pivoter simultanément à l'aide d'une seule liaison pivot, simplifiant la fabrication du système de vol.

Avantageusement, chaque module primaire de propulsion d'un même côté donné du plan sagittal est en liaison rotule avec le harnais, le pivotement d'un module primaire de propulsion donné étant indépendant du pivotement des autres modules primaires de propulsion du même côté. Dans une telle configuration, chaque module primaire de propulsion d'un côté donné peut exercer une force de poussée dans une direction différente, permettant de diversifier encore les configurations de vol.

Avantageusement, la pluralité de modules primaires de propulsion est pivotable dans une configuration d'avancement dans laquelle la force de poussée primaire forme un premier angle d'avancement par rapport au sol. Dans une telle configuration, une composante verticale de la force de poussée primaire permet le maintien en l'air ou l'élévation de l'utilisateur, c'est-à-dire le déplacement vertical de l'utilisateur, et une composante horizontale de la force de poussée primaire permet alors un déplacement horizontal.

Avantageusement, les modules primaires d'un premier côté du plan sagittal pivotent de manière synchrone et les modules primaires d'un deuxième côté du plan sagittal pivotent de manière synchrone, les pivotements des modules du premier côté et des modules du deuxième côté étant indépendants. Ainsi, les possibilités de déplacement de l'utilisateur sont améliorées, par exemple pour effectuer une rotation sur lui-même ou se déplacer horizontalement dans le plan frontal.

Avantageusement, les modules primaires de propulsion d'un même côté donné du plan sagittal sont répartis symétriquement par rapport au plan frontal du corps de l'utilisateur. Dans une telle configuration, le déplacement horizontal pour un utilisateur est identique lorsque l'utilisateur se déplace vers l'avant du plan frontal ou lorsque l'utilisateur se déplace vers l'arrière du plan frontal.

### PRÉSENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique en perspective isométrique avant d'un utilisateur équipé d'un système de vol selon un premier mode de réalisation de l'invention, dans une configuration de vol vertical ;
la figure 2 est une représentation schématique en perspective isométrique arrière d'un utilisateur équipé d'un système de vol selon un deuxième mode de réalisation de l'invention, dans la configuration de vol vertical ;
la figure 3 est une représentation schématique en perspective isométrique avant d'un utilisateur équipé d'un système de vol selon un troisième mode de réalisation dans la configuration de vol vertical ;
la figure 4 est une représentation schématique en perspective isométrique avant d'un utilisateur équipé du système de vol de la figure 1 dans une configuration de vol vertical ;
la figure 5 est une représentation schématique en perspective isométrique arrière d'un utilisateur équipé du système de vol de la figure 1 dans la configuration de vol horizontal ;
la figure 6 est une représentation schématique en perspective isométrique avant d'un utilisateur équipé du système de vol de la figure 1 dans une configuration de décollage ;
la figure 7 est une représentation schématique en perspective isométrique avant d'un utilisateur équipé du système de vol de la figure 1 dans une première configuration d'avancement
la figure 8 est une représentation schématique en perspective isométrique arrière d'un utilisateur équipé du système de vol de la figure 1 dans une autre variation de la configuration d'avancement.
la figure 9 est une représentation schématique en perspective isométrique avant d'un utilisateur équipé du système de vol de la figure 1, dans une configuration de rotation ;
la figure 10 est une représentation schématique en perspective isométrique avant d'un utilisateur équipé du système de vol de la figure 1, dans une configuration de virage.

Il faut noter que les figures exposent l'invention de manière détaillée pour permettre de mettre en oeuvre l'invention ; bien que non limitatives, lesdites figures servent notamment à mieux définir l'invention le cas échéant.

Dans la description et les revendications, on adoptera à titre non limitatif la terminologie longitudinal, transversal et vertical en référence au trièdre X, Y, Z indiqué aux figures.

### DESCRIPTION DETAILLEE DE L'INVENTION

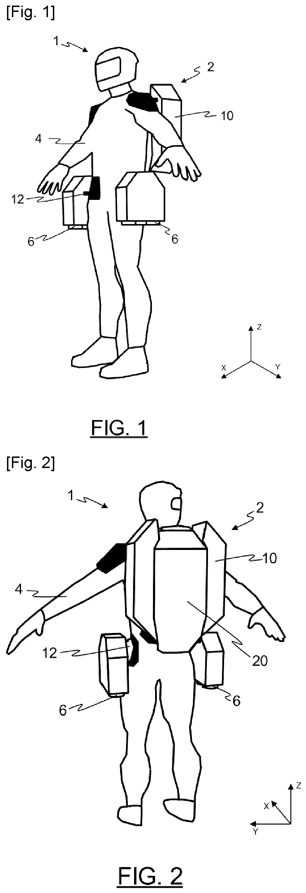

L'invention concerne un système de vol 2, notamment un système de vol 2 individuel de type « JetPack » équipant un utilisateur 1, comme illustré sur la figure 1.

Le corps de l'utilisateur 1 présente trois plans anatomiques s'intersectant au niveau du centre de gravité de l'utilisateur lorsqu'il n'est pas équipé par le système de vol 2. Un premier plan anatomique, dit « plan sagittal », divise de manière sensiblement symétrique le corps de l'utilisateur en une partie droite et une partie gauche.

Un deuxième plan anatomique, dit « plan frontal », divise le corps en une partie avant et une partie arrière. Le plan frontal est perpendiculaire au plan sagittal.

Un troisième plan anatomique, dit « plan transversal », divise le corps en une partie haute et une partie basse. Le plan transversal est perpendiculaire au plan sagittal et au plan frontal.

Le système de vol 2 comprend un harnais 4 configuré pour couvrir au moins partiellement le buste et entourer les hanches de l'utilisateur 1. La hanche est entendue ici comme l'articulation qui forme la jonction entre les jambes et le buste de l'utilisateur 1. Ici, le harnais 4 est une combinaison intégrale, couvrant le corps de l'utilisateur 1. Alternativement, le harnais 4 peut comporter plusieurs pièces équipées indépendamment les unes des autres.

Le harnais 4 supporte une pluralité de modules primaires 6 de propulsion. Les modules primaires 6 de propulsion sont configurés pour exercer une force de poussée primaire permettant d'élever ou de maintenir en l'air l'utilisateur 1. Les modules primaires 6 sont répartis symétriquement au niveau des hanches de l'utilisateur 1, de part et d'autre du plan sagittal du corps de l'utilisateur 1. Autrement dit, une première partie des modules primaires 6 est située du côté de la partie gauche du corps de l'utilisateur 1 et une deuxième partie des modules primaires est située du côté de la partie droite du corps de l'utilisateur 1. Les modules primaires 6 peuvent optionnellement être logés dans un même carter, comme représenté sur la figure 1, dans lequel chaque carter accueille ici trois modules primaires 6. Le système de vol 2 peut naturellement comprendre au total un nombre pair de modules primaires différent de six, par exemple deux, quatre, ou huit modules.

De préférence, les modules primaires 6 d'un même côté du plan sagittal sont répartis symétriquement par rapport au plan frontal du corps de l'utilisateur 1. Dans une telle configuration, le déplacement horizontal pour l'utilisateur 1 est identique lorsque l'utilisateur 1 se déplace vers l'avant du plan frontal ou lorsque l'utilisateur 1 se déplace vers l'arrière du plan frontal. Dans la suite de la description, on parlera d'avancement pour décrire aussi bien le déplacement vers l'avant du plan frontal que le déplacement vers l'arrière du plan frontal.

De préférence encore, les modules primaires 6 de propulsion d'un même côté donné du plan sagittal sont solidaires d'au moins un module primaire 6 adjacent, un unique module primaire de propulsion étant en liaison rotule 12 avec le harnais 4. Sur la figure 1, le module primaire 6 compris dans le plan frontal est le module en liaison rotule 12 avec le harnais 4. Ce module primaire 6 est en liaison avec deux autres modules primaires 6, l'un en avant du plan frontal et l'autre en arrière du plan frontal. Dans une telle configuration, l'intégralité des modules de propulsion primaire 6 d'un même côté donné du plan sagittal peuvent pivoter simultanément à l'aide d'une seule liaison rotule 12, simplifiant la fabrication du système de vol 2.

Pour générer une force de poussée, les modules primaires 6 sont alimentés en énergie par au moins un réservoir 10. Ici, le réservoir 10 est situé sur le buste de l'utilisateur 1 et est solidaire du harnais 4. Les modules primaires 6 de propulsion peuvent fonctionner à l'aide d'un carburant liquide, solide ou gazeux stocké dans le réservoir 10 dans le cas d'une propulsion thermique, par exemple du kérosène, de l'hydrogène ou du gaz naturel liquéfié, mais peuvent également être alimentés par une énergie électrique, le réservoir 10 comprenant alors au moins une batterie électrique ou un système générateur de courant électrique.

La pluralité de modules primaires 6 est pivotable, par l'intermédiaire de liaisons rotules 12, entre le harnais 4 et la pluralité de modules primaires 6. Ainsi, les modules primaires 6 permettent à l'utilisateur de voler dans une configuration de vol dite « vol vertical » et une configuration de vol dite « vol horizontal ». Dans la configuration de vol vertical, le plan frontal du corps de l'utilisateur s'étend perpendiculairement par rapport au sol, autrement dit perpendiculairement à un plan de référence X, Y. Dans la configuration de vol horizontal, le plan frontal du corps de l'utilisateur s'étend parallèlement par rapport au sol, autrement dit parallèlement au plan de référence X, Y. Le système de vol 2 permet à l'utilisateur 1 équipé de voler en configuration de vol horizontal et/ou en configuration de vol vertical, et de passer d'une configuration à une autre pendant le vol. Ainsi, l'utilisateur peut choisir la configuration la plus appropriée, par exemple en fonction de la phase de vol, des conditions de stabilité ou de la topologie de l'environnement survolé. Par exemple, l'utilisateur 1 peut réaliser une opération de décollage en configuration de vol vertical puis, lorsqu'il atteint une altitude satisfaisante, effectuer une transition de la configuration de vol vertical vers la configuration de vol horizontal. De la même manière, l'utilisateur 1 peut effectuer une transition de la configuration de vol horizontal vers la configuration de vol vertical, par exemple pour réaliser une opération d'atterrissage. Le système de vol 2 peut également permettre à l'utilisateur 1 de voler dans toute configuration de vol comprise entre la configuration de vol horizontal et configuration de vol vertical. Un tel système de vol est ainsi configuré de sorte à garantir l'équilibre et la stabilité de l'utilisateur en vol, quelle que soit la configuration de vol et quels que soient sa capacité de proprioception et sa maitrise du système de vol.

Pour améliorer le confort de l'utilisateur 1, notamment dans la configuration de vol horizontal, le harnais 4 peut comprendre des tiges rétractables (non illustrées) pouvant servir d'appuis pour le buste ou les jambes de l'utilisateur.

Dans le mode de réalisation illustré sur la figure 1, la force de poussée primaire est parallèle au plan frontal dans la configuration de vol vertical et la force de poussée primaire est perpendiculaire au plan frontal dans la configuration de vol horizontale. Dans une telle configuration, le système de vol 2 autorise l'utilisateur 1 à décoller ou atterrir perpendiculairement par rapport au sol dans la configuration de vol vertical comme dans la configuration de vol horizontal. Une telle configuration permet également le vol stationnaire.

Il est à noter que par « force de poussée primaire », on entend une force résultante d'une force de poussée de chaque module primaire 6 de propulsion pris individuellement. Ainsi, tant que cette résultante est parallèle au plan frontal en vol vertical et perpendiculaire au plan frontal dans la configuration de vol horizontal, la force de poussée d'un module primaire 6 de propulsion pris seul peut avoir une orientation différente, compensée par l'orientation des autres modules primaires 6 de propulsion.

La figure 2 illustre le système de vol 2 dans un autre mode de réalisation de l'invention. Ici, le système de vol 2 comprend un premier réservoir 10 configuré pour alimenter les modules de propulsion d'un premier côté du plan sagittal et un deuxième réservoir 10 configuré pour alimenter les modules de propulsion d'un autre côté du plan sagittal. Dans une telle configuration, la position des réservoirs 10 peut être adaptée pour être au plus proche des modules alimentés. En outre, une partie du dos de l'utilisateur 1 peut être laissée libre, par exemple pour simplifier la réception d'un équipement supplémentaire. Sur la figure 2, le système de vol 2 comprend alors un module de propulsion dorsal 20, relié au harnais 4, au niveau du dos de l'utilisateur. Le module de propulsion dorsal 20 est configuré pour exercer une force de poussée dorsale. La force de poussée dorsale est parallèle au plan frontal de l'utilisateur 1. Dans la configuration de vol vertical, la force de poussée dorsale contribue au déplacement vertical de l'utilisateur 1. Dans la configuration de vol horizontal, la force de poussée dorsale permet le déplacement horizontal de l'utilisateur 1. Il est à noter que le système de vol 2 peut comprendre un module de propulsion dorsal 20 quand bien même il comprendrait un unique réservoir 10.

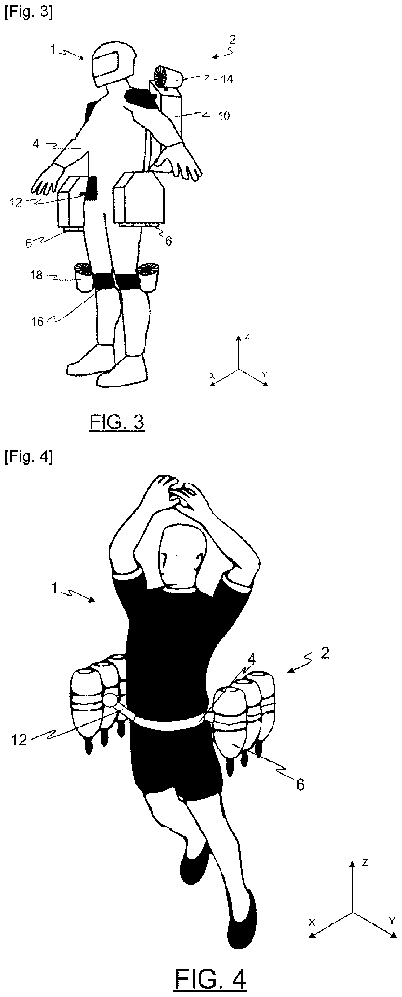

La figure 3 illustre le système de vol 2 dans un autre mode de réalisation de l'invention. Ici, le système de vol 2 comprend notamment une pluralité de modules secondaires 14 de propulsion reliée au harnais 4, la pluralité de modules de propulsion secondaire 14 étant répartis symétriquement, au-dessus des épaules de l'utilisateur 1 et configurée pour exercer une force de poussée secondaire. Ici, la pluralité de modules secondaires 14 est pivotable par l'intermédiaire de liaisons rotules 12 entre le harnais 4 et la pluralité de modules secondaires 14, au moins entre la configuration de vol vertical dans laquelle la force de poussée secondaire est perpendiculaire au plan frontal et la configuration de vol horizontal dans laquelle la force de poussée secondaire est parallèle au plan frontal. Dans une telle configuration, les forces de poussées élevant l'utilisateur 1 sont partiellement distribuées sur le haut du corps de l'utilisateur, permettant de gagner en stabilité, particulièrement en configuration de vol horizontal.

Sur le système de vol 2 de la figure 3, le harnais 4 comprend, indépendamment des modules de propulsion secondaires 14, des genouillères 16 configurées pour être portées par l'utilisateur 1. Une pluralité de modules tertiaires 18 est reliée aux genouillères, la pluralité de modules tertiaires 18 de propulsion étant répartis symétriquement au niveau des genoux de l'utilisateur 1 et configurée pour exercer une force de poussée tertiaire. Ici, la pluralité de modules tertiaire 18 est pivotable par l'intermédiaire de liaisons rotules 12 entre les genouillères et la pluralité de modules tertiaires 18, au moins entre la configuration de vol vertical dans laquelle la force de poussée tertiaire est perpendiculaire au plan frontal et la configuration de vol horizontal dans laquelle la force de poussée tertiaire est parallèle au plan frontal.

De manière analogue à la force de poussée primaire, il est à noter que par « force de poussée secondaire », on entend une force résultante d'une force de poussée de chaque module secondaire 14 de propulsion pris individuellement. Ainsi, tant que cette résultante est parallèle au plan frontal en vol vertical et perpendiculaire au plan frontal dans la configuration de vol horizontal, la force de poussée d'un module secondaire 14 de propulsion pris seul peut avoir une orientation différente, compensée par l'orientation des autres modules secondaires 14. Un principe identique peut être appliqué à la force de poussée tertiaire et aux modules tertiaires 18.

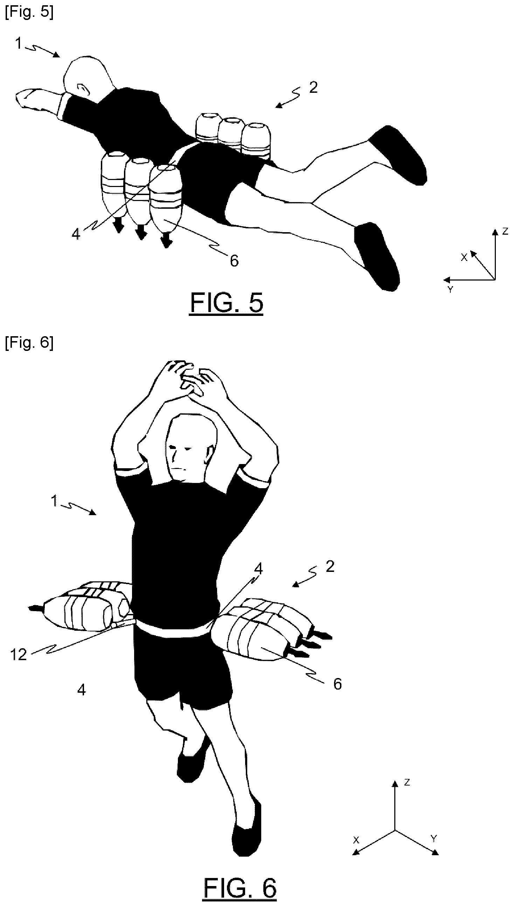

La suite de la description s'attache à décrire des configurations de vol d'un utilisateur équipé du système de vol 2 selon les modes de réalisation décrits précédemment, notamment le mode de réalisation de la figure 1. La figure 4 correspond à une configuration de vol vertical du système de vol décrit selon le premier mode de réalisation et la figure 5 correspond à la configuration de vol vertical du système de vol décrit selon le premier mode de réalisation. Par soucis de lisibilité, seul l'utilisateur 1, le harnais 4, les liaisons rotules 12 et les modules primaires 6 sont représentés. Il est entendu que le système de vol 2 selon les modes de réalisation de la figure 2 et de la figure 3 permettent notamment les déplacements décrits ci-après.

La figure 6 illustre le système de vol 2 selon une configuration de décollage, dans laquelle la pluralité de modules primaires 6 est pivotable de sorte que la force de poussée de chacun des modules primaires 6 est perpendiculaire au plan sagittal, orientée à l'opposé du corps de l'utilisateur 1. Dans une telle configuration, l'utilisateur 1 au sol peut régler la force de poussée primaire sans que cette dernière soit orientée vers le sol, et passer de la configuration de décollage à l'une des configurations de vol lorsque la poussée est suffisante pour que l'utilisateur 1 puisse s'élever intégralement sans risque. Ici, l'utilisateur est représenté débout sur ses pieds au décollage, mais peut alternativement être sur le buste au décollage, les modules primaires 6 pivotant de manière identique dans les deux cas.

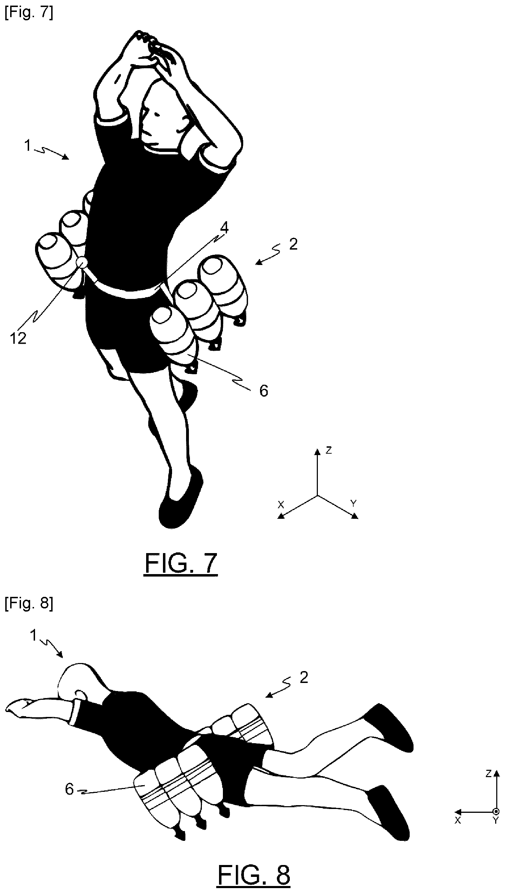

La figure 7 et la figure 8 illustrent un utilisateur équipé du système de vol dans une configuration d'avancement selon deux variantes. La variante de la figure 8 diffère de la figure 7 uniquement en ce que dans la figure 8, le plan frontal du corps de l'utilisateur 1 est parallèle au sol. La pluralité de modules primaires de propulsion est pivotable dans une configuration d'avancement dans laquelle la force de poussée primaire forme un premier angle d'avancement par rapport au sol. Un tel angle induit que la force de poussée primaire comprend une composante verticale et une composante horizontale. La composante verticale de la force de poussée permet le déplacement vertical de l'utilisateur, autrement dit cette composante s'oppose au poids de l'utilisateur 1 et permet à l'utilisateur d'être maintenu en l'air ou de s'élever. La composante horizontale permet l'avancement de l'utilisateur 1.

Pour enrichir les possibilités de déplacements, les modules primaires 6 d'un premier côté du plan sagittal peuvent pivoter de manière synchrone et les modules primaires 6 peuvent pivoter de manière synchrone, les pivotements des modules du premier côté et des modules du deuxième côté étant indépendants. Autrement dit, les modules primaires 6 du premier côté du plan sagittal et du deuxième côté du plan sagittal peuvent former des angles différents par rapport au corps de l'utilisateur 1. La valeur de la force de poussée exercée par les modules primaires 6 du premier côté du plan sagittal peut également être différente de la valeur de la force de poussée des modules primaires 6 du deuxième côté du plan sagittal, permettant d'enrichir encore les possibilités de déplacement.

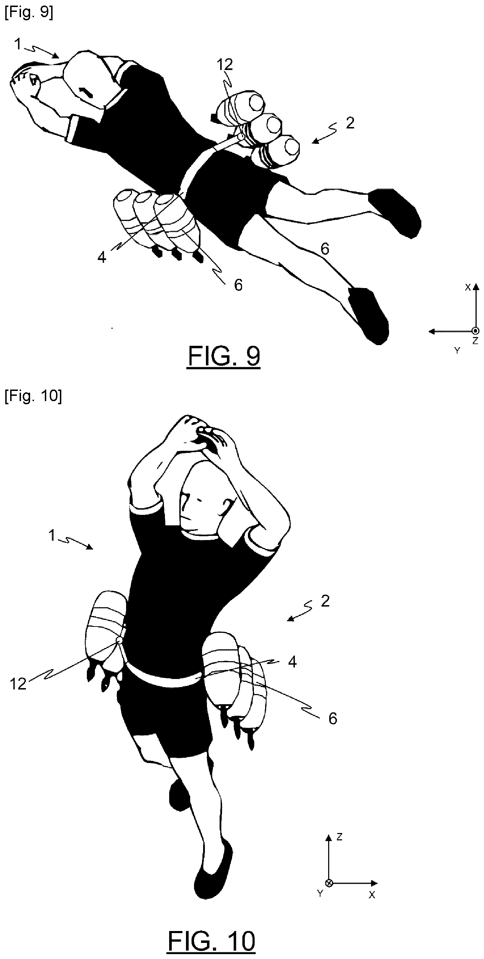

L'utilisateur 1 peut par exemple tourner sur lui-même en effectuant une rotation selon l'axe transversal Y, comme illustré sur la figure 9, en faisant pivoter les modules primaires selon ce même axe transversal Y. Une rotation selon l'axe vertical Z est également possible, en faisant pivoter les modules primaires 6 selon l'axe vertical Z. L'utilisateur 1 peut également par exemple se déplacer horizontalement dans le plan frontal, ici en faisant pivoter uniquement les modules primaires d'un côté donné du plan sagittal autour de l'axe longitudinal X, comme illustré sur la figure 10. Dans la configuration de vol horizontal, les modules primaires 6 des deux côtés du plan sagittal peuvent pivoter autour de l'axe longitudinal X pour améliorer le déplacement horizontal.

Pour rappel, les déplacements décrits et illustrés sur la figure 4, la figure 5, la figure 6, la figure 7, la figure 8, la figure 9 et la figure 10 sont compatibles avec un système de vol 2 selon le mode de réalisation de la figure 2 et de la figure 3. Le pivotement des modules secondaires 14 et des modules tertiaires 18 est alors adapté pour la réalisation desdits mouvements décrits.

Le système de vol comprend avantageusement un dispositif de commande (non-illustré). Le dispositif de commande est configuré pour permettre à l'utilisateur de contrôler ses déplacements réalisés à partir du système de vol, ainsi que les transitions d'une configuration à une autre configuration. Pour déterminer notamment l'angle d'avancement de la force de poussée par rapport au sol, le dispositif de commande peut comprendre une pluralité de capteurs configurés pour détecter une instruction formée par les mains de l'utilisateur, chaque instruction correspondant à un signe donné de la main. Par exemple, un poing fermé paume vers le bas peut correspondre à une instruction d'avancement. L'utilisation peut ainsi commander un déplacement horizontal, un déplacement vertical où une combinaison de ces deux déplacements comme décrit ci-dessus. Alternativement ou en complément, des instructions peuvent être données par un mouvement de la tête de l'utilisateur, permettant davantage d'instructions. Pour déterminer notamment la configuration du corps de l'utilisateur par rapport au sol, l'unité de commande peut comprendre une pluralité de capteurs configurés pour détecter une instruction formée par un déplacement du buste de l'utilisateur. Par exemple, un mouvement des épaules vers l'arrière peut correspondre à une instruction de pivotement de sorte que le corps de l'utilisateur passe de la configuration de vol horizontal à la configuration de vol vertical. Enfin, pour déterminer notamment la valeur de la force de poussée des modules de propulsion, l'unité de commande peut comprendre une télécommande permettant à l'utilisateur de sélectionner parmi un ensemble de valeurs de forces prédéterminées. Chaque valeur prédéterminée peut par exemple correspondre à un « niveau » intuitif pour l'utilisateur. La télécommande peut notamment prendre la forme d'un dentier porté par l'utilisateur dans sa bouche, l'utilisateur actionnant un niveau en serrant le dentier à l'aide de sa mâchoire. Alternativement, la télécommande peut par exemple prendre la forme d'une poignée munie d'un joystick et/ou de boutons et/ou de gâchettes, ou d'un écran tactile monté sur l'un des bras de l'utilisateur.

On notera par ailleurs que l'invention n'est pas limitée aux modes de réalisation décrits précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Système de vol (2) comprenant :
- un harnais (4) configuré pour être porté par un utilisateur (1), ledit harnais (4) couvrant au moins partiellement le buste et entourant les hanches de l'utilisateur (1) ;
- une pluralité de modules primaires (6) de propulsion reliés au harnais (4), la pluralité de modules primaires (6) étant répartis symétriquement au niveau des hanches de l'utilisateur (1) de part et d'autre d'un plan sagittal du corps de l'utilisateur (1), les modules primaires (6) étant configurés pour exercer une force de poussée primaire de sorte à élever ou maintenir en l'air l'utilisateur (1) ;
- au moins un réservoir (10) d'énergie configuré pour alimenter en énergie la pluralité de modules primaires (6) de propulsion ;
le système de vol (2) étant **caractérisé en ce que** la pluralité de modules primaires (6) de propulsion est pivotable, par l'intermédiaire de liaisons rotules (12) entre le harnais (4) et la pluralité de modules primaires (6) de propulsions, au moins entre une configuration de vol vertical dans laquelle un plan frontal du corps de l'utilisateur (1) s'étend perpendiculairement par rapport au sol et une configuration de vol horizontale dans laquelle le plan frontal du corps de l'utilisateur (1) s'étend parallèlement par rapport au sol.

2. Système de vol (2) selon la revendication 1, dans lequel la force de poussée primaire est parallèle au plan frontal dans la configuration de vol vertical et la force de poussée primaire est perpendiculaire au plan frontal dans la configuration de vol horizontal.

3. Système de vol (2) selon l'une quelconque des revendications précédentes, dans lequel la pluralité de modules primaires (6) est pivotable dans une configuration de décollage dans laquelle la force de poussée de chacun des modules primaires (6) est perpendiculaire au plan sagittal et orientée à l'opposé de l'utilisateur (1) de sorte que la force de poussée primaire soit nulle.

4. Système de vol (2) selon l'une quelconque des revendications précédentes, comprenant une pluralité de modules secondaires (14) de propulsion reliée au harnais (4), la pluralité de modules de propulsion secondaire (14) étant répartis symétriquement, au-dessus des épaules de l'utilisateur (1) et configurée pour exercer une force de poussée secondaire.

5. Système de vol (2) selon l'une quelconque des revendications précédentes, dans lequel le harnais (4) comprend des genouillères (16) configurées pour être portées par l'utilisateur (1) et une pluralité de modules tertiaires (18) de propulsion reliée aux genouillères (16), la pluralité de modules tertiaires (18) de propulsion étant répartis symétriquement au niveau des genoux de l'utilisateur (1) et configurée pour exercer une force de poussée tertiaire.

6. Système de vol (2) selon l'une quelconque des revendications précédentes, dans lequel le réservoir (10) d'énergie est solidaire du harnais (4) au niveau du buste de l'utilisateur (1).

7. Système de vol (2) selon la revendication 6, dans lequel le réservoir (10) comprend un premier compartiment configuré pour alimenter les modules de propulsion d'un premier côté du plan sagittal et un deuxième compartiment configuré pour alimenter les modules de propulsion d'un deuxième côté du plan sagittal.

8. Système de vol (2) selon l'une quelconque des revendications précédentes, comprenant un module de propulsion dorsal (20) relié au harnais (4) au niveau du buste de l'utilisateur (1) et configuré pour exercer une force de poussée dorsale.

9. Système de vol (2) selon l'une quelconque des revendications précédentes, dans lequel les modules primaires (6) de propulsion d'un même côté donné du plan sagittal sont solidaires d'au moins un module primaire adjacent, un unique module primaire de propulsion étant en liaison rotule (12) avec le harnais (4).

10. Système de vol (2) selon l'une quelconque des revendications précédentes, dans lequel la pluralité de modules primaires (6) de propulsion est pivotable dans une configuration d'avancement dans laquelle la force de poussée primaire forme un premier angle d'avancement par rapport au sol.

11. Système de vol (2) selon l'une quelconque des revendications précédentes, dans lequel les modules primaires (6) d'un premier côté du plan sagittal pivotent de manière synchrone et les modules primaires (6) d'un deuxième côté du plan sagittal pivotent de manière synchrone, les pivotements des modules du premier côté et des modules du deuxième côté étant indépendants.

12. Système de vol (2) selon l'une quelconque des revendications précédentes, dans lequel les modules primaires (6) de propulsion d'un même côté donné du plan sagittal sont répartis symétriquement par rapport au plan frontal du corps de l'utilisateur (1).
